# EUROPEAN PATENT APPLICATION

(11) **EP 2 921 738 A2**
(43) Date of publication of application: **23.09.2015**
(21) Application number: 15155672.7
(22) Date of filing: 18.02.2015
(51) Int. Cl.: F16F 7/09

(54) **A dampening system**

(30) Priority: 18.02.2014 DE 102014102047
(71) Applicant: Gealan Formteile GmbH, 95145 Oberkotzau (DE)
(72) Inventor: Laubmann, Gerhard, 95119 Nalla (DE); Sommerer, Gerd, 95168 Markleuthen (DE); Buheitel, Christian, 95111 Rehau (DE)
(74) Representative: Fleuchaus, Michael A.

(57) **Abstract**

The present invention is directed to a dampening system for dampening movement of an actuator in at least one of a first direction and a second direction substantially opposite to the first direction. The dampening system comprises an actuating member, at least one dampening element and a guide structure.

## Description

### Technical field

The present invention refers to dampening systems and uses thereof. In particular, the present invention refers to dampening systems for dampening movement of an actuating member in at least one direction. The dampening system can be used, for example, in a compartment of a vehicle.

### Background of the invention

In the prior art, dampening elements are used, for example, in compartments of a vehicle, in order to avoid, amongst other things, noise made from the cover/lid of the compartment hitting the stopper when opening, or sudden motions that might distract the driver. The rotational opening/closing movement of the cover/lid will either be transposed to a translational movement for interaction with the dampener or directly be dampened by a dampener for rotational movements. In most of these applications, however, the dampener system works based on a translational movement.

For the dampening system there is typically the requirement that in the opening movement of the cover/lid, a higher dampening effect takes place in comparison with the closing movement. The opening movement of the cover/lid is generally driven by gravity or spring force, after the latch is released from the locked position. This movement is generally dampened relatively strongly to ensure a smooth and continuous opening action of the cover/lid. In the closing movement of the cover/lid only a little dampening may be implemented, so that the resistance to the user is minimized when closing the cover.

Furthermore, an effect may be formed that through the opening movement of the cover under its own weight, a displacement of the centre of gravity of the cover takes place along the opening motion. Thus, the opening torque generally increases with increasing opening angle due to this displacement of the center of gravity. This will result in an uneven opening motion of the cover/lid. At a constant dampening force there is a risk that, at small opening angles of the cover, the resultant torque from the gravitational/spring force is less than the dampening torque. This may have the consequence that the opening of the cover, without an additional pull on the cover, may be impeded.

Dampening systems are known in the art, e.g., from the utility model DE 20 704 2011102 in which the dampening action is produced by an annular friction element which is designed as a soft component. By a cone, the friction element is additionally widened in one moving direction and thus dampening is amplified. In the second movement direction, this reinforcing effect is not obtained.

The object of the invention is to provide improved dampening systems over the prior art. In particular, the invention seeks to provide dampening systems which are reliable, of little complexity and may allow different amounts of dampening in one direction of movement vs. another direction, or along the path of a single direction of movement. Additionally, a dampening system is favoured which does not require transposing rotational movement to a translational movement in order to provide the dampening but still provide a reliable and low complexity system.

These and other objects are at least in part solved by the invention as defined by independent system claims 1 and 2. Specific embodiments of the present invention are the subject matter of the dependent claims. Preferred uses of the invention are defined in claim 13.

### General Description

Specifically, the present invention is directed to a dampening system for dampening movement of an actuator in at least one of a first direction and a second direction substantially opposite to the first direction. The dampening system comprises an actuating member, at least one dampening element and a guide structure.

In the first dampening system according to the present invention, the dampening element is connected to and actuated in the first direction and second direction by the actuating member and comprises a first restraining element and a second restraining element. The dampening system has an axis defining the movement of the actuating member in the first direction and the second direction, wherein the first restraining element and the second restraining element have a first maximum radial height and a second maximum radial height with respect to the axis, respectively. The first restraining element is arranged at a first position on the dampening element and the second restraining element is positioned at a second position on the dampening element along the first and second direction. The dampening element further comprises a flexible element arranged between the first restraining element and the second restraining element. The flexible element contacts both the first restraining element and the second restraining element, and has a thickness and a third maximum radial height with respect to the axis.

The guide structure has at least one contact surface, wherein the contact surface contacts the flexible element of the dampening element during movement in at least one of the first direction and the second direction.

According to the invention, the first dampening system is characterized in that the third maximum radial height is greater than each of the first maximum radial height and the second maximum radial height, and the first maximum radial height and the second maximum radial height are different. The distance between the outer radial end of the first restraining element and the contact surface defining a first gap height and the distance between the outer radial end of the second restraining element and the contact surface defining a second gap height, and the ratio of the first maximum radial height and the first gap height and the ratio of the second maximum radial height and the second gap height defines a predetermined dampening factor in the first direction and the second direction, respectively, and the ratio of the thickness of the flexible element to the third maximum radial height is less than, whereby the flexible element is deflected during movement of the actuator in only one of the first direction and the second direction, the flexible element being non-deflected when the flexible element substantially flushly contacts both the first restraining element and the second restraining element, and the flexible element being deflected when the flexible element substantially flushly contacts only one of the first restraining element and the second restraining element.

A restraining element in the sense of the present invention is an element which restrains the deformation of the flexible element, typically in the form of a deflection or other movement of parts of the flexible element in a particular direction. The height of the restraining element in combination with the remaining distance from the tip end of the restraining element to the contact surface represents a relative gap area which limits the amount of deformation of the flexible element in, or into this area. The ratio of the height and the gap distance provides a measure of the amount of deformation allowed for the flexible element, referred to as a dampening factor in the sense of the present invention. By providing restraining elements of different heights on the two sides of the flexible element, the first dampening system of the present invention is able to achieve different amounts of dampening in opposite directions. The restraining element, in a preferred embodiment, may be a stopper made of a rigid material.

An axis is defined in the present invention in order to provide a basis for measuring the dimensions of the basic elements of the invention. For example, the radial height of the restraining elements and the flexible element are taken with respect to the axis.

The guide structure functions by defining the direction of movement of the dampening element when actuated by the actuating member. For example, the guide structure may be a housing enclosure completely or partially housing the dampening element or it may only be a rail structure not fully enclosing the dampening element. The contact surface is the surface of the guide structure which contacts the flexible element. The dampening of the movement of the actuator is caused by the friction of the flexible element against the contact surface, a greater friction created will lead to a higher dampening effect.

The flexible element and the restraining elements are preferably constructed such that only the flexible element contacts the contacting surface. This is implemented by providing a greater radial height to the flexible element than each of the restraining elements. The flexible element is made of a material which is suitable for creating friction with the contact surface, whereas the restraining element is typically, however not necessarily made from a rigid material, for structural purposes. Allowing only the flexible element to contact the contact surface may increase the durability of the dampening system and allow defining the dampening effect more precisely.

The flexible element is designed such that it can be deflected or otherwise deformed away from the direction of movement. This requires that the flexible element have a form where a portion of this element be deflected without excessive force to a certain extent. A narrower element in this case allows more deflection than a thicker element and may, again, increase the durability of the dampening system and allow defining the dampening effect more precisely.

In an embodiment, the dimensions of the flexible element are such that the thickness is less than the height of the flexible element, i.e. a ratio of less than 1, alternatively, 0.8, 0.7, 0.6, 0.5, 0.4, 0.3, 0.2 and 0.1.

Preferably, the dampening element is configured with the flexible element sandwiched between two restraining elements where the restraining elements have different heights such that the flexible element is deflected in one direction of movement of the actuator more than in the other direction of movement of the actuator, given the flexible element's frictional contact with the contacting surface along which it is moved by movement of the actuator.

When, in this process, the flexible element is urged to deflect in the direction of the restraining element with the greater height, the flexible element should not be deflected, or less deflected as the case may be, but may even be forced into the gap area between the tip end of the restraining element and the contacting surface. Depending on the dampening factor, which is defined by the ratio of the height of the restraining element and the gap area, the flexible element may deflect slightly but should substantially not deflect. In this case, the flexible element is substantially flush against both restraining elements.

When the flexible element is urged to deflect in the direction of the retraining element with the lower height, the flexible element is able to deflect more due to the increased gap area, which also allows a certain deflection into this increased gap area. The flexible element may thus peel away from the surface of the restraining element with the greater height and bend into the gap area between the tip end of the restraining element having the lower height and the contacting surface. In this case, the flexible element is only substantially flush against the restraining element with the lower height.

Advantageously, this embodiment of the present invention allows the actuating member to be dampened by different amounts in two, substantially opposite directions of movement as desirable in, for example, the opening and closing of compartment covers of a compartment.

Additionally, this embodiment of the invention exhibits low complexity and makes use of a low number of elements. Also for these reasons, it exhibits reliable operation and is simple to produce. Indeed, the specific construction of the first dampening system of the invention may be manufactured completely from plastic components, and thus, even in a single injection mould using multiple component injection moulding processes.

In a second dampening system for dampening movement of an actuator in at least one of a first direction and a second direction substantially opposite the first direction according to the present invention, the dampening system comprises again an actuating member, at least one dampening element, and a guide structure.

The dampening element of the second dampening system is connected to and actuated in the first direction and the second direction by the actuating member, the dampening element comprising a first restraining element and a second restraining element. The dampening system has an axis defining the movement of the actuating member in the first direction and a second direction. The dampening element further comprises a flexible element.

The guide structure has at least one contact surface, wherein the contact surface contacts the flexible element of the dampening element during movement in the at least one of the first direction and the second direction.

The second dampening system according to the present invention is characterized in that the dampening element further comprises a hinge element for tilting the flexible element, wherein the first restraining element is configured to maintain the flexible element in a first tilt angle with respect to the direction of movement when moving in the first direction and the second restraining element is configured to limit the flexible element to a second tilt angle with respect to the direction of movement when moving in the second direction. The first tilt angle defines a dampening factor in the first direction of movement, the first tilt angle maximizing the engagement of the flexible element with the contact surface as the tilt angle increases and thus increasing the frictional force against movement of the corresponding first direction thereby producing dampening of the movement with the dampening factor.

The second dampening system includes a hinge element which allows the flexible element to rotate about the hinge and assume different angles with respect to the direction of movement of the actuator. In contrast with the first dampening system of the present invention, the restraining elements in this case are for maintaining and/or limiting the flexible element at a first angle for maximum contact with the contact surface of the guide structure and for limiting the second angle of the flexible element when it should have minimum or substantially no contact with the contact surface.

As such, rather than a deflection in the flexible element causing the reduction of friction between the flexible element and the contact surface, the angle of the flexible element itself is changed to achieve a similar effect as in the case of a deflecting flexible element. However, this is not to say that a deflection of the flexible element does not occur. Naturally, when the flexible element contacts the contact surface during movement, the flexible element may be deflected or deformed to some extent depending on the actual form of the flexible element and the amount of friction between the flexible element and the contact surface. In this embodiment, engagement of the flexible element with the contact surface is maximized at a first tilt angle during movement of the actuator in the first direction. This first tilt angle as a result defines the dampening factor for the first direction of movement of the actuator.

Furthermore, as the flexible element is actuated in the first direction by a frictional engagement between the flexible element and the contact surface and movement of the dampening element, the angle of the flexible element may increase up to the first angle substantially self-driven. As the angle increases, in turn, the amount of contact of the flexible element with the contact surface will also increase, increasing the frictional force between the flexible element and the contact surface. The effect is the increased dampening of the actuating member from the initial movement to a point where the flexible element reaches the first angle in the first direction, where the dampening will remain constant upon further movement of the actuator.

Advantageously, the second dampening system of the present invention allows variable dampening along the movement in a direction. Weaker dampening can be employed at the onset of the actuating member, with increased dampening as the actuating member further actuates the dampening element. This embodiment also exhibits low complexity and makes use of a low number of elements. Thus, it exhibits reliable operation and is simple to produce.

In both cases, the first and the second dampening system according to the invention, the axis may be a linear axis, alternatively, a curved axis in space, i.e. a curve. Specifically, the axis may define or be arranged parallel to the path of the movement of the actuator in the first or the second direction in space.

Embodiments of the present invention will now be further described, with the embodiments applying equally to both the first and second dampening systems of the present invention as described above.

In a preferred embodiment of the invention, the dampening element and/or the contact surface are at least in part symmetric relative to the axis.

Specifically, in an example of this embodiment, the guiding surface may be in the form of a cylinder inside of which the dampening element moves as a plunger so that the flexible element contacts the guiding surface substantially in a circle. In this case, both the dampening element as well as the guiding surface are rotationally symmetric about the axis. In this implementation of this embodiment, movement of the actuator substantially along the axis in a translatory movement would be preferred.

In an alternative example of this embodiment, the guiding surface may be arranged in the form of opposing flat surfaces extending substantially along the axis, which are point symmetric relative to a point on the axis, and the dampening elements may be in the form of opposing linear elements, i.e. elements having a substantially linear flexible element extending perpendicular to the axis, and which are similarly point symmetric relative to the axis. Contact between the flexible element and the contacting surfaces is substantially in a line. Preferably, movement of the actuator is again substantially along the axis in a translatory movement.

In yet an alternative implementation of this embodiment, the guiding surface may again be arranged in the form of a cylinder, i.e. rotationally symmetric about the axis. Again, in this implementation, and the dampening elements may be in the form of opposing linear elements, i.e. elements having a substantially linear flexible elements, which are point symmetric relative to the axis. In this case, the dampening elements and the flexible elements extend in a direction of the axis and also contact between the flexible elements and the contacting surface is parallel to the axis. Preferably, in this implementation, movement of the dampening elements and thus at least parts of the actuator is substantially perpendicular to the axis in a rotational movement about the axis.

In a similar arrangement, the flexible element could extend radially and engage with a disk-like contact surface. In such arrangement, again, the contact surface would be rotationally symmetric about the axis and the flexible elements point symmetric relative to a point on the axis. The further components of the dampening elements, specifically the restraining elements, would also exhibit point symmetry with regard to the axis. Accordingly, when a rotational motion is applied, the flexible elements would glide over the contacting surface similarly as a wiper would glide in a circular movement over such flat surface.

A symmetric arrangement of dampening element(s) with symmetric flexible element(s) and restraining elements, the flexible element(s) symmetrically contacting (a) symmetric contacting surface(s) allows the dampening element(s) to provide consistent contact about all parts of the outer periphery of the dampening element(s), especially when the housing structure coincides substantially in shape with the dampening element(s).

In addition to this, a symmetric arrangement of dampening element(s) with symmetric flexible element(s) and restraining elements, and symmetrically contacting (a) symmetric contacting surface(s) will lead to a "self centring "of the dampening element(s) relative to the contacting surface(s) and thus make up for deviations in the exact, i.e. theoretic paths of the movement in the first or the second direction in order to allow tolerance in the driving and the driven systems that are interacting with the dampening systems of the invention. Advantageously, in such symmetric embodiments of the invention, a uniform dampening effect can still be provided despite potential tolerances in the mechanical systems involved.

In another embodiment, at least a portion of the shape of the outer perimeter of at least one of the first restraining element (2a) and the second restraining element (2b) substantially corresponds to the shape of the outer perimeter of the flexible element (2c). Further to this, at least a portion of the shape of the outer perimeter of the flexible element may substantially corresponds to the shape of the contact surface of the guide structure.

When a restraining element is made substantially the same shape as the perimeter of the flexible element, the deflection of the flexible element is essentially completely uniform in the direction of that restraining element. This is especially so, when the flexible element substantially uniformly contacts the contacting surface. Additionally, the flexible element will be equally deflected across the whole perimeter of the flexible element, linear or curved, due to the matching shape.

Close fitting of at least parts of the flexible element with the contact surface allows for a more uniform dampening effect of the dampening element along the guide structure, and, if a symmetric embodiment of the dampening system is involved, even fulfils a guiding function. Matching the flexible element completely with the contact surface of the guide structure provides a solid and smooth movement, which minimizes rattling and maximizes accuracy in the desired dampening effect.

For example, both the flexible element and one of the restraining elements may be in the shape of a circle, where the flexible element being slightly larger due to the requirement of the radial height of the flexible element being greater than the radial height of the restraining element. A deflection of the flexible element in this case will be substantially uniform in the direction of the said restraining element provided a substantially uniform contact with the contacting surface is given.

In another embodiment, the size, shape and/or the position of the first restraining element and the second restraining element is adjustable, optionally during movement in the first direction and the second direction.

According to the invention, the restraining elements are configured to provide the appropriate dampening factor for the dampening element. Larger restraining elements and restraining elements which are shaped closely to the flexible element generally provide a stronger limitation of the deflection of the flexible element in the direction of the restraining element and thus higher friction, and consequently, a higher dampening effect.

In the embodiment, the positioning of the restraining elements is modifiable, preferably during movement of the actuator, so as to configure/vary the dampening factor, depending upon the position of the restraining element relative to the flexible element. For example, in an embodiment having a cylindrical contacting surface and a plunger type dampening element, restraining elements could be made having different radial heights, i.e. move radially relative to the axis depending on the position of the actuator along its path. For example, such adaptable restraining elements, when having a circular base shape, could be in the form of an iris mechanism, expanding where larger restraining force is needed at some point along the path of the actuating element, hence less deflection of the flexible element in the direction of such restraining element. Alternatively, in an embodiment of the present invention where the movement is of a rotational nature, the flexible elements (and likewise the restraining elements) being arranged in a linear manner parallel to the axis, a mechanism could be provided allowing adjustment of the radial height of the restraining elements by a circular lever mechanism pushing the restraining elements radially outwardly when the control disc (to which the restraining elements are substantially radially attached) is rotated versus the actuating member. This way, by relative rotation of the actuator vs. the control disc, the specific dampening factor of such a dampening system could be set.

As is understood, the dampening factor relies on the radial height of the restraining elements and the gap area between the tip of the restraining element to the contact surface. The radial height can be adjusted by the size, shape and positioning, of the restraining elements as indicated above, but not only limited thereto. Indeed, any mechanism allowing to modify the radial height of the restraining element(s) will bring about a modification of the dampening factor in at least one of the first and the second movement direction by modification of the ratio between the gap area and the restraining element's radial height.

The dampening factor can thus be varied during movement of the dampening element when actuated by the actuating element. The dampening factor can also be varied statically, i.e. when the actuating element is not moving. Different levels of friction can be generated at different positions of the dampening element during or without movement by modification of the ratio between the gap area of the tip end(s) of the restraining element(s) to the contact surface and the radial height of the restraining element(s).

As an alternative to the movement/repositioning of the restraining element(s), it might also be possible to modify the gap area by having the contact surface extend in a manner relative to the path of movement of the actuator such that the gap distance between the tip end of the restraining elements increases by way of arranging the contact surface further away from the restraining elements and thus increasing the gap area. For example, in the case of a cylindrical contact surface inside of which a plunger type dampening element moves substantially along the centre axis of the cylinder, the cylinder radius can slightly increase towards one and/or the other end of the cylinder, thus providing a larger gap area when the dampening element reaches the respective positions while traveling along the contact surface and, correspondingly reducing the dampening effect through a reduced friction between the flexible element and the contacting surface.

In another embodiment, the first restraining element and/or the second restraining element are integral with the flexible element. In such an embodiment, the restraining element(s) may be manufactured together with the flexible element in a single production step, i.e. by multiple component injection moulding. This helps to make sure that the flexible element will not be lost during assembly of the dampening system. Also, an integral part allows for simplified maintenance and helps to reproduce the dampening factors precisely even in a repaired or refurbished dampening element.

In an embodiment of the invention, the contact surface is a curved surface. Specifically, the contact surface may be curved to follow a predefined path of the actuator's movement in the first and second direction. This way, for example, a rotary movement about an axis, such as, for example, by a cover of a compartment, can by dampened by arranging a dampening element according to this embodiment at an off-axis position. The radius of curvature of the contact surface would thus substantially follow the movement of the actuator, which is attached to the cover, along such radius about the axis.

Specifically, such an embodiment may be advantageously combined with a symmetric arrangement of contact surfaces and dampening elements which are driven by an actuator following a curved movement of the cover. The axis of symmetry would thus be a curved axis and follow the path of the actuator when moving in the first and second direction. Thus, in essence, the combined embodiment includes a symmetric pair of contact surfaces extending in a curved manner parallel to the curved axis of symmetry which, in turn, extends parallel to the movement path of the actuator.

As discussed, the movement in the first direction and the second direction may be defined by a rotational movement about the axis or as a linear or curved translatory movement at least partially along the axis. In the case of a rotational movement about the axis, the movement of the dampening element is, in fact, along a circular line about the axis. Accordingly, the movement of the dampening element is translational in a direction perpendicular to the axis and offset therefrom.

The present invention can thus advantageously be provided so as to match the actual type of movement, i.e. translational or rotational and adapted to the specific requirements, such as spacing, tolerance requirements, etc. This way, intermediary mechanics transposing rotational movements into translational may be dispensable of.

In yet another embodiment, the contact of the flexible element and the contact surface varies between a first position along the direction of movement of the first and second direction and a second position along the direction of movement of the first and second direction, and the contact at the second position is larger than the contact at the first position.

This has in part been discussed before in the context of the gap area by having the contact surface extend in a manner relative to the path of movement of the actuator. In the present embodiment, it is, however, envisaged that such modification of the gap area is not along the full length of the contact between the flexible element and the contacting surface but rather that the actual extent (or length, intensity) of the contact between the flexible element and the contacting surface is modified.

Such variation of the contact may be effected, for example, by movement of the dampening element in a direction perpendicularto the axis during movement along the first and second direction relative to the contact surface, wherein, optionally, movement of the dampening element is in the form of a rotational movement.

This provides for variation of dampening by varying the parts, the section of the flexible element which contacts the guide structure, and more specifically the contact surface of the guide structure. The flexible element and the contact surface are designed such that the amount of contact between the two varies during movement, specifically the portions of the flexible element contacting the contact surface varies from one position to another position. Essentially the flexible element is urged against the contact surface by movement of the dampening element in a direction perpendicular to the axis during movement.

In an example thereof, the dampening element and specifically the flexible element thereon, and the guide structure are both elliptical in shape. The flexible element, however, is smaller than the inner perimeter of the contact surface, for example at least the small semi-major of the flexible element might be smaller than the semi-major of the contact surface thus providing a "thinner" elliptically shaped dampening element in "thicker" elliptically shaped contacting surface cylinder. Such dampening element, in addition to the main movement along the guide structure, can, within certain limits, be moved in a direction perpendicular to the main direction of movement, i.e. a certain amount of rotation about the axis. By this means, different amounts of contact between the flexible element and the contacting surface may be effected..

A similar situation may be to slightly tilt a linear flexible element against a similarly linear contacting surface either more or less, thus effecting less or more contact of the flexible element against the contact surface and thus less or more friction.

With regard to the movement of the dampening element in the first or second direction, the above described motions of the flexible element would be represented by a roll movement.

The present invention is also directed to the use of the first and second dampening systems according to the present invention for dampening the opening and/or closing motion of a compartment cover of a compartment, specifically a compartment of a vehicle.

The above embodiments are not mutually exclusive and can be used in any appropriate combination.

### Brief description of the figures

Figure **1a** is a schematic side view of a dampening system according to first embodiments of the present invention during movement of the actuator in a first direction.
Figure **1b** is a schematic side view of the dampening system according figure **1a** during movement of the actuator in a second direction.
Figure 2 is a schematic side view of a dampening system according to a second embodiment of the present invention.
Figure 3a is a schematic side view of a dampening system according to a third embodiment of the present invention.
Figure 3b is a schematic side view of an alternative arrangement of the dampening element according to the third embodiment of the present invention.
Figure 3c is a schematic sectional view of the dampening element according to figure 3b along the lines BB'.
Figure 4a is a schematic side view of a dampening system according to a fourth embodiment of the present invention during movement of the actuator in a first direction.
Figure 4b is a schematic side view of the dampening system according to figure 4a during movement of the actuator in a second direction.
Figure 5a is a schematic front view of a dampening system according to a fifth embodiment of the present invention in a first position.
Figure 5b is a schematic front view of a dampening system according to figure 5a in a second position.

### Detailed description

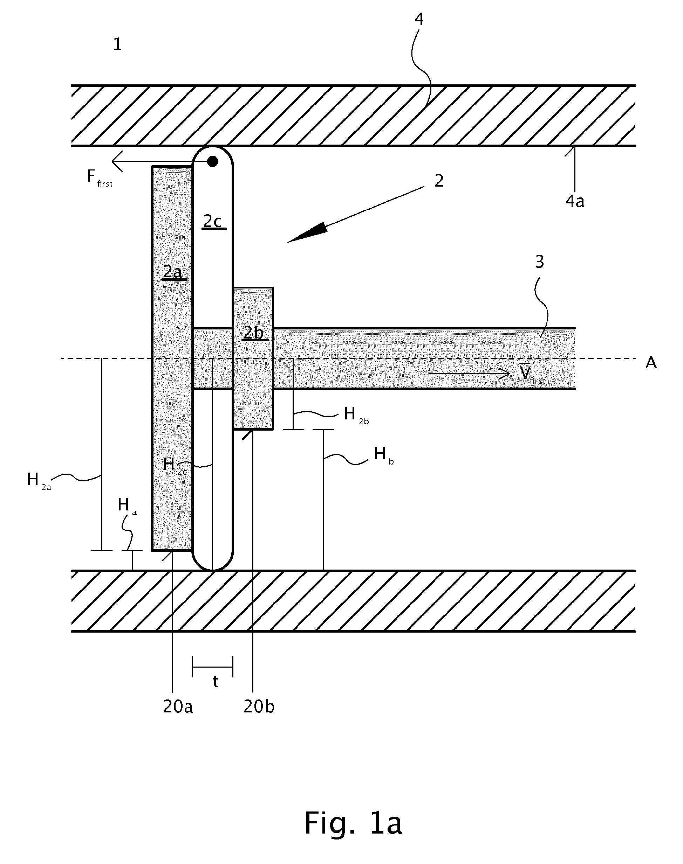

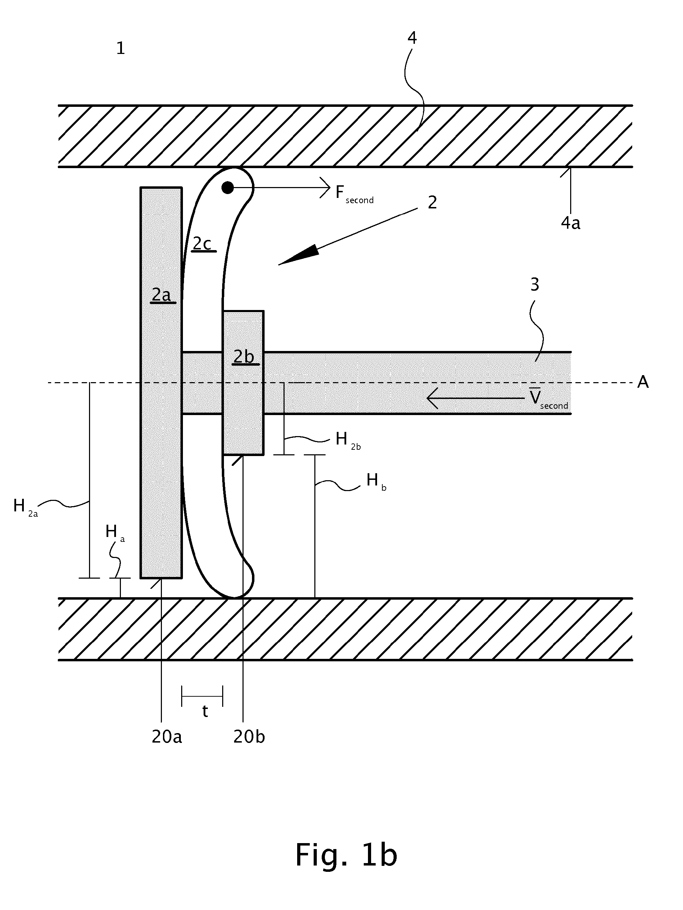

The following description is directed to exemplary embodiments of the present invention as illustrated in figures 1 to 5. These embodiments are illustrative only and the present invention is not limited to these specific embodiments. Rather, the exemplary embodiments are meant to impart a more thorough understanding of the functions of the elements of the present invention and how they interact. Like reference numerals refer to like elements or elements having a similar function throughout the following description.

Figures **1a** and **1b** depict a cross sectional side view of a first embodiment of the present invention. As can be taken from figure 1, the embodiment is arranged symmetric about the axis A, wherein symmetry might be rotational or point symmetric when viewed in a direction along the axis. The main components of the dampening system 1 include a dampening element 2, an actuating member 3 connected to the dampening element 2 and a guide structure 4. The actuating member 3 is connected to the dampening element 2 and actuates the dampening element 2 as guided by guide structure 4 and, in particular contact surfaces 4a.

The dampening element 2 comprises a first restraining element 2a, a second restraining element 2b and flexible element 2c sandwiched there-between. The flexible element 2c has a thickness t and a radial height of H_{2c}. The flexible element may be made of any suitable material such as, for example, soft plastic compounds, silicones, rubbers, or other elastomers. As discussed, the dampening element with or without the actuator may be manufactured in a combined manufacturing process, for example, by multi-component injection moulding

As displayed in **figure 1****,** the radial height H_{2c} is greater than the thickness t so as to provide sufficient flexibility of the flexible member to deflect during movement of the actuating member 3 as, for example, depicted in **figure 1b****.** The first and second restraining elements 2a, 2b have a radial height of H₂ₐ and H_{2b}, respectively. The radial heights H₂ₐ, H_{2b} are taken with respect to an axis A. The radial ends 20a, 20b of the first and second restraining elements 2a, 2b, respectively, are the ends closest to the contact surface 4a. The distance between the radial ends 20a, 20b and the contact surface 4a of the guide structure is given as heights Hₐ and H_{b}, respectively, and can be considered a gap or gap area.

As shown, the radial height H_{2c} is greater than each of the radial heights H₂ₐ, H_{2b}. This ensures that contact is made essentially only between the contact surface 4a and the flexible element 2c.

The ratio of the radial height H₂ₐ, H_{2b} of the restraining element to the distance Hₐ, H_{b} of the gap area defines a dampening factor D when the flexible element 2c is urged in the direction of that restraining element.

**Figure 1a** shows the dampening element 2 in a position during movement in a first direction V_{first}, where the actuating member 3 is pulling the dampening element 2 (i.e., movement to the right of **figure 1a**). As a result, the flexible element is urged to the direction of the first restraining element 2a. This is shown in **figure 1a** as the force F_{first}.

In this embodiment, the first restraining element 2a has a radial end 20a very close to the contact surface 4a. As a result, there is only a small gap area between the radial end of the first restraining element 2a and the contact surface 4a of the guide structure. When the flexible element 2c is pushed against this first restraining element 2a, the flexible element will substantially contact flushly against the first restraining element 2a and cannot majorly deform into the gap area. Indeed, a slight deformation into the gap area may, however, occur depending on the distance Hₐ between the contact surface and the tip end of the first restraining element and the material properties of the flexible component. Accordingly, a small part of the tip of the flexible element 2c may be pushed into the gap area but essentially it will remain as shown in **figure 1a****.**

This configuration generates higher friction between the contact surface 4a and the flexible element 2c. A higher dampening factor is defined by this configuration of the first restraining element 2a and the movement in this first direction will be dampened more strongly.

Referring now to **figure 1b**, the actuating member 3 causes the dampening element 2 to move in the other direction represented by the directional vector V_{second}. As shown, this is a pushing movement to the left side of **figure 1b****.** In this case the force applied to the flexible element 2c is in the opposite direction, shown as F_{second}.

The deflection of the flexible element 2c in this situation depends on the second restraining element 2b. In comparison with the first restraining element 2a, the second restraining element 2b has a smaller radial height H_{2b} and thus provides a greater gap area between the radial end of the second restraining element 2c and the contact surface 4a denoted as the distance H_{b}. The presence of the larger gap area allows the flexible element 2c to deform into this space when F_{second} is applied. Since the flexible element 2c is permitted to deflect partially away from the contact surface 4a, friction between the flexible element 2c and the contact surface 4a is reduced in comparison with the configuration in **figure 1a****.** A lower dampening factor is subsequently provided by the second restraining element 2b.

In this embodiment of the present invention, the dampening element 2 may, for example, move like a plunger inside a cylindrical contact surface 4a of the guide structure 4. Due to the matching form of the flexible element 2c and the contact surface 4a, the contact between these elements is substantially in a circle. The plunger type embodiment is a specific implementation having the dampening element 2 and the contact surface 4a being rotationally symmetric about the axis, where the movement of the dampening element is of a translatory nature.

Alternatively, **figure 1** also schematically explains a dampening system, wherein the dampening element 2 may have two opposing flexible elements, moving along two opposing contact surfaces 4a of the guide structure 4. In this arrangement, the contact between the flexible elements 2c and the contact surface 4a is substantially linear at the opposing tip ends of the flexible elements 2c and in the direction normal to the drawing surface of **figure 1****.** This embodiment is a specific implementation having the dampening element 2 and the contact surface 4a being point symmetric along the axis, where the movement of the dampening element is also of a translatory nature.

Accordingly, the dampening can be different between the first and the second direction of movement V_{first} and V_{second}. The dampening is defined by the configuration of the restraining elements 2a, 2b. Although a stronger dampening effect is shown with respect to the pull direction and a weaker dampening effect is shown with respect to the push direction in **figure 1****,** the restraining elements could be configured for the opposite to be true (i.e., the first restraining element having a smaller radial height than the second restraining element). Additionally, the first restraining element 2a may be adjusted to provide some deflection of the flexible element 2c for a weaker dampening effect depending on the application and desired dampening parameters.

Again, while **figures 1a** **and** **1b** show the first restraining element 2a, second restraining element 2b and the flexible element 2c as separate components, they made be formed integrally for cost saving and ease of manufacturing purposes. The shape of the components may also differ. In **figures 1a** **and** **1b****,** the components may be cylindrical or linear, but the invention is not limited as such.

For example, instead of a cylindrical shape having a cross-sectional side view as a thin sheet, the flexible element 2c may have an L-shape with the first restraining element 2a contacting the longer surface of the L-shape and the second restraining element 2b contacting the shorter surface of the L-shape. In a specific embodiment, the second restraining element may even have a height as low as the thickness of the actuator and thus the deflection of the flexible element being limited by the flexible element's own stiffness.

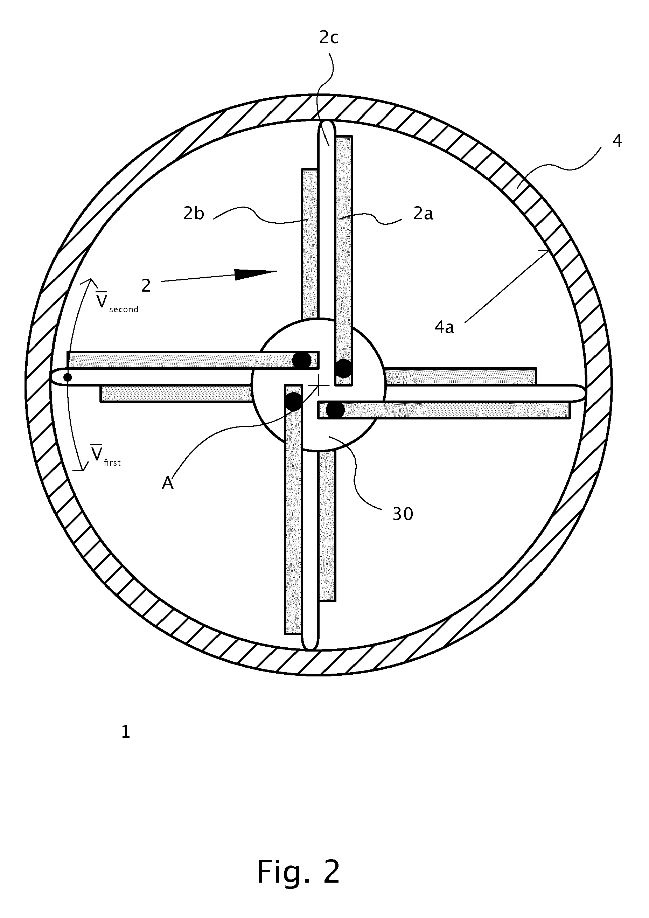

A second embodiment of the present invention is shown in **figure 2****.** Rather than implementing a dampening system in a linear construction as in **figures 1a** **and** **1b**, the dampening system 1 may be implemented in a rotational configuration. The dampening system 1 of the second embodiment comprises four dampening elements 2, an actuating member (not seen as arranged in a plane behind control disc 30), and a guide structure 4. The dampening elements 2 are provided in this example at equal intervals radially about the actuating member with respect to the rotation axis A and attached thereto.

The core dampening function of this embodiment is fundamentally similar as in the embodiment of **figures 1a** **and** **1b** only that the contact between the flexible element and the contacting surface may be of a different shape. Instead of the push and pull direction of the actuator, i.e. a translatory movement thereof and also of the dampening elements, there is a clockwise and counter-clockwise direction of the actuator. With respect to the axis, therefore, the movement is thus in a perpendicular direction in a plane normal to the axis.

The radial heights of the restraining elements 2a, 2b and the flexible element 2c will be taken with respect to the centre of rotation.

When the dampening elements 2 are rotated in the clockwise direction, the dampening of the movement of the actuating member will be lower than when the dampening elements 2 are rotated in the counter-clockwise direction. This is due to the radial height of the first restraining elements 2a being greater than the radial height of the second restraining element 2b, allowing the flexible elements to deflect into the gap area between the tip end of the second restraining elements 2b when rotating clockwise as opposed and substantially standing up flushly against the first restraining elements 2a when rotating counter clockwise.

An additional feature of this embodiment is an adjustable radial height of the first restraining elements 2a. This is implemented by connecting the first restraining elements 2a in radially movable manner to control disc 30. The control disc will generally rotate at equal angular velocity as actuating member 3 and thus no relative rotation between the actuating member and the control disc 30 occur. When, however, the control disc 30 is rotated relative to the actuating member in a counter clockwise direction, this pushes the restraining elements 2a slightly outwardly thus bringing about a change in the ratio between the radial height of the first restraining element and the distance between its tip end and the contacting surface 4a.

Naturally, the embodiment as shown in figure 2 may likewise be implemented without any adjustment mechanism for the radial height of the restraining elements.

The specific manner to vary the restraining elements' radii during movement of the actuating member may be implemented differently and not only for one of the restraining elements but, for example both. Similarly, it may also be applied to the embodiment shown in **figures 1a** **and** **1b****.** In this embodiment, for example, an iris mechanism could be used for a circular plunger restraining element whereby the overall circular size and thus also its radius can be expanded/contracted. Expansion and contraction of the connecting portions would correspondingly provide a greater or smaller radial height H₂ₐ, H_{2b} to the restraining elements 2a, 2b and increase/decrease the amount of dampening, respectively.

The embodiment of **figure 2** is an example of a dampening system 1 having a guide structure 4 with a rotationally symmetric guide surface 4a, while the flexible elements 2 are arranged to be opposing linear elements (extending in the direction in and out the drawing plane) and are point symmetric relative to the rotational axis. The dampening elements 2, and specifically the flexible elements 2c, have a length in a direction of the axis and the contact area between the flexible elements 2c and the contacting surface 4a is parallel to the axis. In **figure 2****,** however, only a contact point/portion of the flexible elements 2c with the contact surface 4a can be seen from the cross-sectional view. If incremental cross-sections would be mapped together for a 3-D view, it could be seen that the flexible elements 2c run in a direction parallel to the rotation axis and provide a contact line or area with the contact surface 4a.

While not depicted in **figure 2** or any other figure, another embodiment may be similarly implemented and explained with the help of **figure 2****.** Specifically, such embodiment may have a disc shaped contact surface (eg. the drawing plane inside the circular area inside the contact surface 4a of **figure** 2) and the dampening elements arranged similarly in the four directions as indicated in **figure 2****.** Differently from **figure 2****,** however, the dampening elements may have their flexible elements and restraining elements extend in a radial manner and in the direction inside the drawing plane (i.e. parallel to the axis). This way, the flexible elements will have a radial line of contact with the contact surface which may be implemented as a disk. When the actuating element is rotated, the flexible elements of the dampening elements will glide over the disc-like contact surface about the axis similar to a wiper.

Indeed, the embodiment just described could be combined with the embodiment depicted in **figure 2****.**

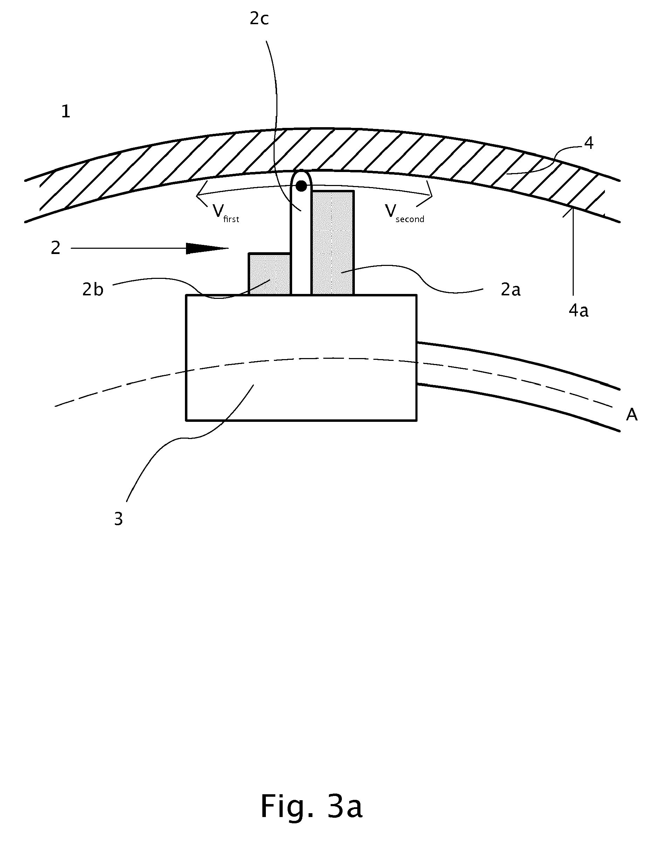

Turning now to **figures 3a to 3c****,** a third embodiment according to the present invention is shown.

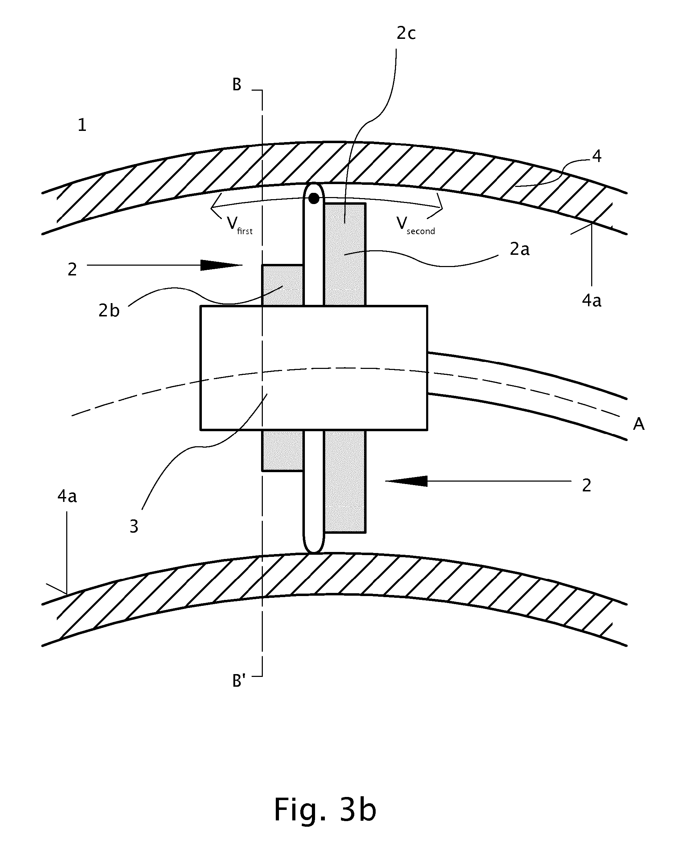

**Figures 3a** **and** **3b** illustrate dampening systems 1 comprising a dampening element 2, actuating member 3, and guide structure 4. Different to what was said with respect to the first and second embodiments, the guide structure 4 of this embodiment does not enclose the dampening element 2. The guide structure 4 guides the dampening element along a curved path in a rail like manner. The path may also be linear and dependent on the desired direction of movement of the dampening element.

The dampening element 2 is similar to the dampening elements described with respect to the first and second embodiments. The flexible element 2c is positioned between two restraining elements 2a, 2b where the restraining elements 2a, 2b are configured such that the flexible element 2c may be deflected more to one of the restraining elements than the other.

In **figure 3a****,** the contact surface 4a is provided only as a single sided top surface of the guide structure. This demonstrates that the present invention may also be applied asymmetrically.

**Figure 3b** demonstrates an embodiment in which a second contact surface 4a is provided as a bottom contact for another dampening element 2. The second dampening element 2 is essentially the same as the first dampening element 2 but flipped about an axis A between the two contact surfaces 4a, which are point symmetric relative to the axis A. It is noted that the axis A in these embodiments is curved and the direction of movement of the actuating element, while translational, is also along a curved path.

In the case of **figure 3a** where a single contact surface 4a is utilized, the dampening element 2 must be quite precisely and tightly controlled during movement relative to the contact surface 4a in order to ensure the correct dampening (by contact of the flexible element 2c and the contact surface 4c). The combination of the top and bottom contact surfaces 4a in **figure 3b** allows more flexibility as to how precisely the dampening element 2 must engage the contact surface 4a. The necessary friction can be distributed amongst the first and second contact surfaces and would thus not vary strongly if the actuator was moved imprecisely along the axis A.

Indeed, this arrangement of the dampening elements 2 and the contact surfaces 4a provides a "self centring" mechanism and makes up for deviations in the exact path of movement in the first and second direction, and may even allow for a guiding function of the movement of the actuator. This allows a tolerance in the driving and the driven systems that interact with the dampening system 1 through the actuator and may render complicated mechanics dispensable of. Thus, a uniform dampening effect can be achieved while providing more flexible functioning of the mechanical system improving longevity of the components in the overall system.

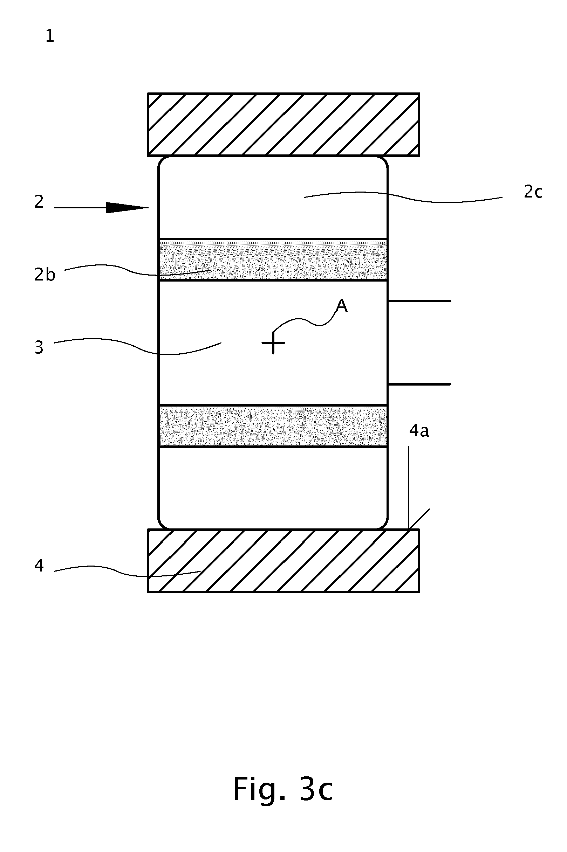

**Figure 3c** is a schematic sectional view along the line BB' of the embodiment depicted in **figure 3b** when viewed from the left side.

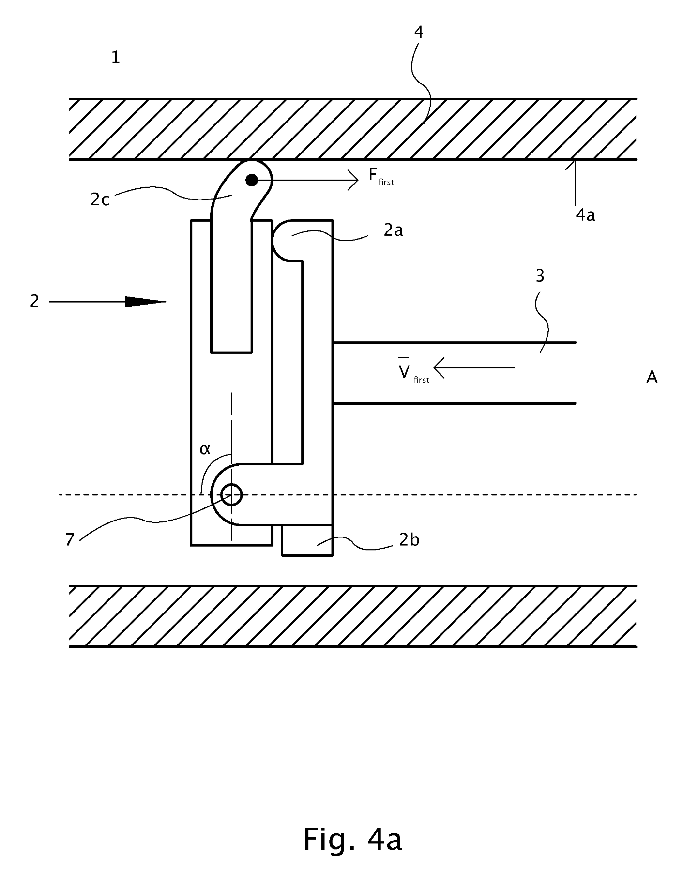

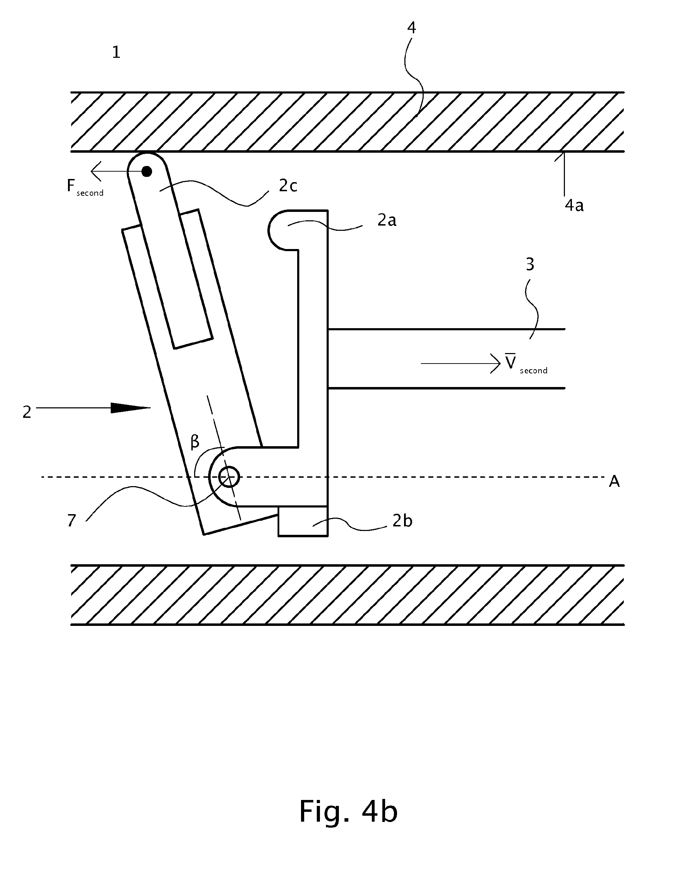

**Figures 4a** **and** **4b** are directed to a fourth embodiment according to the present invention. As in the embodiments described above, the dampening system 1 of the fourth embodiment comprises a dampening element 2, an actuating member 3, and a guide structure 4. However, the manner in which the dampening is achieved in the fourth embodiment is different from the previous embodiments.

The dampening element 2 includes a first restraining element 2a, a second restraining element 2b, a flexible element 2c and a hinge 7. The flexible element 2c is connected to the remaining part of the dampening element 2 via the hinge 7. The hinge 7 allows the flexible element 2c to be oriented at different angles.

As shown in **figure 4a****,** the first restraining element 2a acts as a stopper for maintaining the position of the flexible element 4c at a first tilt angle α as shown in figure 4a. When the actuating member 3 moves the dampening element 2 in a first direction V_{first} (i.e., to the left), the flexible element 2c will be forced in the opposite direction as shown by the force F_{first}. The flexible element 2c will rotate about the hinge until it is blocked by the contacts the first restraining element 2a, which maintains the flexible element 2c at this maximum tilt angle during movement in the direction V_{first}. The position of the flexible element 2c maintained by the first restraining element 2a maximizes the contact between the flexible element 2c and the contact surface 4a, leading to a higher dampening factor.

Thus, in contrast to the embodiments described previously, the fourth embodiment defines the dampening factor by the tilt angle of the flexible element 4a with respect to the direction of movement. In this example, a tilt angle of α=90° with respect to axis A provides the maximum strength contact between the flexible element 2c and the contact surface 4a and thus maximum friction. The specific tilt angle for maximum contact is dependent on the configuration of the dampening element 2 and contour of the contact surface 4a and may vary in other implementations.

The second restraining element limits the rotation of the flexible element 2c about the hinge to a second tilt angle β. Referring to **figure 4b**, when the actuating member 3 pulls the dampening element 2 in the direction of V_{second}, the flexible element 2c starts to tilt in the opposite direction as shown by F_{second} due to the movement of the dampening element 2 and its frictional contact with the contact surface 4a. In order to ensure that the flexible element is kept in a state where it can tilt back in the first direction (i.e., that it does not tilt too far, for example horizontal with axis A or tilted around to the other side of the axis A), the second restraining element 2b limits the flexible element to a second tilt angle β. At this second tilt angle, the contact between the flexible element 2c and the contact surface 4a is reduced in comparison to the position of figure 4a.

Depending on whether any dampening is desired in the second direction, the dampening factor in this direction is based on the second tilt angle β set by the second restraining element 2b.

Similar as in cases previously described, in a dampening system according to the fourth embodiment, the restraining elements could be made adjustable so that the dampening element 2 can adjust the dampening factor for movement in at least one direction by modification of the maximum tilt angles α, β of the dampening element and thus modifying the strength of engagement of the flexible element 2c with the contact surface 4a. Consequently, different amounts of dampening can be set for different directions of movement or during movement in one direction.

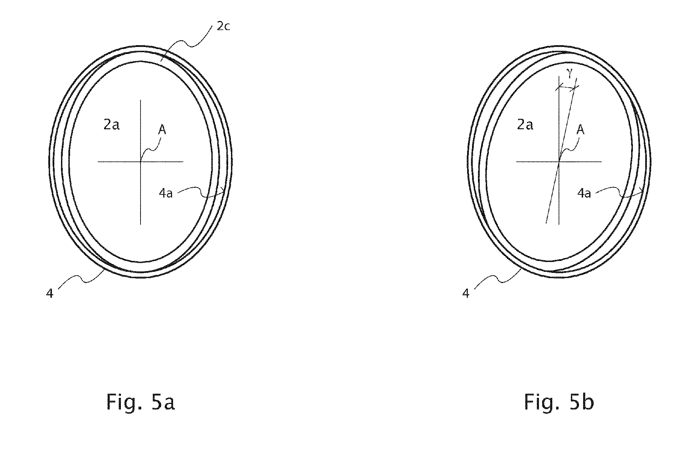

**Figure 5a** shows a front view of a fifth embodiment of the present invention, i.e. a view of an embodiment similar to the first embodiment along the axis. Figure 5a, shows a face view on the dampening element, specifically the first restraining element 2a is shown with the flexible element 2c behind. In the fifth embodiment, the dampening element 2 has a substantially elliptic cross section where the guide structure 4and specifically the contact surface 4a also have an elliptic cross section, however, having at least a larger small semi major than the dampening element 2.

The flexible element 2c has a greater circumference since the flexible element 2c has a greater radial height H_{2c} than the radial height H₂ₐ of the first restraining element 2a at substantially each portion about the axis A. The contact surface 4a is in partial contact with the outer circumference flexible element 2c given the different outer shapes of the dampening element 2 vs. the cross section of the contact surface 4a. As such, there is room for movement of the dampening element 2 in a direction orthogonal to the principal direction of movement of the actuator, such as by rotating the actuator about the axis A. The actuating member 3 is thus configured to rotate the dampening element 3 towards the contact surface 4a, in addition to imposing a movement in a first and second direction. While in this example, the movement is a rotational one, other movements such as translational movements may provide similar effects in differently shaped dampening element/contact surface combinations.

Importantly, it is noted that such rotational (or translational) movement can be imposed on the dampening element along its travel in the first or second direction of movement of the actuating element.

In the first embodiment according to **figure 1**, the dampening element 2may have an essentially a positive fit with the shape of the contact surface with minimal space for any movement except along the guide.

Referring now to **figure 5b****,** the dampening element 3 is actuated to a second position with respect to the contact surface 4a by rotation thereof about the axis A. In this position, larger portions of the flexible element 2c are in contact with the contact surface 4a. Consequently, the friction between the portions of the flexible element 2c contacting the contact surface 4a and the contact surface 4a is higher than in the position of **figure 5a****.** A higher amount of dampening is provided in this position.

According to the fifth embodiment of the present invention, the amount of contact between the flexible element 2c and the contact surface 4a may vary during movement of the dampening element 2 in the first and second direction, where the dampening element 2 is also urged in directions orthogonal to the first and second direction of movement. The dampening can therefore be varied along at different positions in a direction of movement simply by exerting a combination of translatory and rotational movements on the actuator.

The above features have been described with respect to exemplary embodiments as shown in **figures 1 to 5****.** However, the features are not limited to within the embodiments they have been described with. The features of one embodiment may be implemented with the other described embodiments in an appropriate manner.

## Claims

1. A dampening system (1) for dampening movement of an actuator (3) in at least one of a first direction (V_{first}) and a second direction (V_{second}) substantially opposite to the first direction, the dampening system (1) comprising:
an actuating member (3);
at least one dampening element (2) connected to and actuated in the first direction (V_{first}) and second direction (V_{second}) by the actuating member (3), the dampening element (2) comprising a first restraining element (2a) and a second restraining element (2b), the dampening system (1) having an axis (A) defining the movement of the actuating member in the first direction (V_{first}) and the second direction (V_{second}), wherein
the first restraining element (2a) and the second restraining element (2b) have a first maximum radial height (H₂ₐ) and a second maximum radial height (H_{2b}) with respect to the axis (A), respectively, the first restraining element (2a) arranged at a first position on the dampening element (2) and the second restraining element (2b) positioned at a second position on the dampening element (2) along the first and second direction (V_{first}) V_{second}), and
the dampening element (2) further comprising a flexible element (2c) arranged between the first restraining element (2a) and the second restraining element (2b) and contacting both the first restraining element (2a) and the second restraining element (2b), and having a thickness (t) and a third maximum radial height (H_{2c}) with respectto the axis (A);
a guide structure (4) having at least one contact surface (4a), wherein the contact surface (4a) contacts the flexible element (2c) of the dampening element (2) during movement in at least one of the first direction (V_{first}) and the second direction (V_{second}),
**characterized in that**
the third maximum radial height (H_{2c}) is greaterthan each of the first maximum radial height (H₂ₐ) and the second maximum radial height (H_{2b}), and the first maximum radial height (H₂ₐ) and the second maximum radial height (H_{2b}) are different,
the distance between the outer radial end (20a) of the first restraining element (2a) and the contact surface (4a) defining a first gap height (Hₐ) and the distance between the outer radial end (20b) of the second restraining element (2b) and the contact surface (4a) defining a second gap height (H_{b}), and
the ratio of the first maximum radial height (H₂ₐ) and the first gap height (Hₐ) and the ratio of the second maximum radial height (H_{2b}) and the second gap height (H_{b}) defining a predetermined dampening factor (D_{first}, D_{second}) in the first direction (V_{first}) and the second direction (V_{second}), respectively, and
the ratio of the thickness (t) of the flexible element (2c) to the third maximum radial height (H_{2c}) is less than 1,
whereby the flexible element (2c) is deflected during movement of the actuator in only one of the first direction (V_{first}) and the second direction (V_{second}), the flexible element (2c) being non-deflected when the flexible element substantially flushly contacts both the first restraining element (2a) and the second restraining element (2b), and the flexible element (2c) being deflected when the flexible element substantially flushly contacts only one of the first restraining element (2a) and the second restraining element (2b).

2. A dampening system (1) for dampening movement of an actuator (3) in at least one of a first direction (V_{first}) and a second direction (V_{second}) substantially opposite the first direction, the damper system (1) comprising:
an actuating member (3);
at least one dampening element (7) connected to and actuated in the first direction (V_{first}) and the second direction (V_{second}) by the actuating member (3), the dampening element comprising a first restraining element (7a) and a second restraining element (7b), the dampening system (1) having an axis (A) defining the movement of the actuating member in the first direction (V_{first}) and a second direction (V_{second}),
the dampening element (7) further comprising a flexible element (7c); and
a guide structure (4) having at least one contact surface (4a), wherein the contact surface (4a) contacts the flexible element (7c) of the dampening element (7) during movement in the at least one of the first direction (V_{first}) and the second direction (V_{second}),
**characterized in that**
the dampening element (7) further comprises a hinge element (7d) for tilting the flexible element (7c), wherein the first restraining element (7a) is configured to maintain the flexible element (7c) in a first tilt angle with respect to the direction of movement when moving in the first direction (V_{first}) and the second restraining element (7b) is configured to limit the flexible element (7c) to a second tilt angle with respect to the direction of movement when moving in the second direction (V_{second}), and
the first tilt angle defining a dampening factor (D) in the first direction (V_{first}) of movement, the first tilt angle maximizing the engagement of the flexible element (7c) with the contact surface (4a) as the tilt angle increases and thus increasing the frictional force against movement of the corresponding first direction (V_{first}) thereby producing dampening of the movement with the dampening factor (D).

3. The dampening system according to claim 1 or 2, wherein the dampening element (3) and/or the guide structure (4), and in particular the guiding surface (4a) are at least in part symmetric relative to the axis (A).

4. The dampening system according to any one of the preceding claims, wherein at least a portion of the shape of the outer perimeter of at least one of the first restraining element (2a) and the second restraining element (2b) substantially corresponds to the shape of the outer perimeter of the flexible element (2c).

5. The dampening system according to anyone of the preceding claims, wherein at least a portion of the shape of the outer perimeter of the flexible element (2c) substantially corresponds to the shape of the contact surface (4a) of the guide structure (4).

6. The dampening system according to any one of the preceding claims, wherein the size, shape and/or the position of the first restraining element (2a) and the second restraining element (2b) is adjustable, optionally during movement in the first direction (V_{first}) and the second direction (V_{second}).

7. The dampening system according to any one of the preceding claims, wherein the first restraining element (2a) and/or the second restraining element (2b) are integral with the flexible element (2c).

8. The dampening system according to any one of the preceding claims, wherein the contact surface is a curved surface.

9. The dampening system according to any one of the preceding claims, wherein the movement in the first direction (V_{first}) and the second direction (V_{second}) is a rotational movement about the axis (A).

10. The dampening system according to any of claims 1 to 8, wherein the movement in the first direction (V_{first}) and the second direction (V_{second}) is a linear or curved translatory movement at least partially along the axis (A).

11. The dampening system according to anyone of the preceding claims, wherein the contact of the flexible element (2c) and the contact surface (4a) varies between a first position along the direction of movement of the first and second direction (V_{first}, V_{second}) and a second position along the direction of movement of the first and second direction (V_{first,} V_{second}), and the contact at the second position is larger than the contact at the first position.

12. The dampening system according to claim 11, wherein the variation of the contact is effected by movement of the dampening element (2) in a direction perpendicular to the axis (A) during movement along the first and second direction (V_{first}, V_{second}) relative to the contact surface (4a), wherein, optionally, movement of the dampening element (2) is in the form of a rotational movement.

13. The use of the dampening system according to any of the preceding claims for dampening the opening and/or closing motion of a compartment cover of a compartment, specifically a compartment of a vehicle.
